# EUROPEAN PATENT SPECIFICATION

(11) **EP 1 845 141 B1**
(45) Date of publication and mention of the grant of the patent: **09.09.2009**
(21) Application number: 07005040.6
(22) Date of filing: 12.03.2007
(51) Int. Cl.: C09D 133/00

(54) **Antifogging coating composition**
Antibeschlagbeschichtungszusammensetzung
Composition de revêtement anticondensation

(30) Priority: 13.03.2006 JP 2006066989
(43) Date of publication of application: 17.10.2007
(73) Proprietor: MITSUBISHI GAS CHEMICAL COMPANY, INC., Chiyoda-ku, Tokyo 100-8324 (JP); MGC Filsheet Co., Ltd., Tokorozawa-city, Saitama 359-1164 (JP)
(72) Inventor: Marumo, Tomofuyu, Toyonaka-shi, Osaka 561-0823 (JP); Kakeya, Fumiaki, Toyonaka-shi, Osaka 561-0823 (JP)
(74) Representative: HOFFMANN EITLE

(56) References cited:
- US-A1- 2002 161 154
- US-A1- 2003 002 845

## Description

### BACKGROUND OF THE INVENTION

### 1) Field of the Invention

The present invention relates to an antifogging coating composition and an antifogging resin product. More precisely, the present invention relates to an ultraviolet (UV)-curing type antifogging coating composition capable of providing a cured coating film excellent in antifogging properties, slipperiness and processability, and an antifogging resin product coated by said cured coating film.

### 2) Prior Art

Since a polycarbonate resin is excellent in transparency, processing flexibility, lightness in weight and the like, it is widely used as a structural material alternative to glass. Examples of the uses include a covering material of meters or liquid crystal displays for electric, electronic and office automation devices, a material for automobiles such as a covering material of instruments, and a building material such as a roof material for natural lighting and a windowpane. Especially, since a polycarbonate resin is excellent in impact-resistance, it is widely used as a snow goggle, sunglasses, a helmet shield and the like. However, a polycarbonate resin product has disadvantages that the surface of the resin product is easily fogged with fine waterdrops caused by extreme changes of temperature or humidity. This is a critical problem, in particular, for applications requiring visibility such as the uses for a snow goggle, sunglasses, polarized glasses and a helmet shield. Therefore, it is required to impart antifogging properties to a polycarbonate resin product.

In order to fulfill the above requirement, some methods have been proposed. For example, a method of saponifying a cellulose triacetate film to impart antifogging properties is disclosed in Japanese Patent Publication No. S60-147446, A(1985). However, the resin product laminated with the cellulose triacetate film has disadvantages in appearance, and in addition, the process yield is poor.
Japanese Patent Publication No. 2001-231808,A provides a method of preventing fogging by using a goggle lens comprising three inner, intermediate, and outer lens plates wherein the insulating layers are laid among these lens plates. However, the structure is complicated and the cost of process is high.
Japanese Patent Publication No. H08-176466, A (1996) provides an antifogging coating composition obtained by aging a composition comprising a fine metal oxide particle dispersion sol, an organic silicon compound having epoxy groups or a partial hydrolyzate thereof, and an anionic surfactant containing at least a sulfonic acid salt, a salt of a sulfuric ester, a salt of a phosphoric ester or a salt of a carboxylic acid ester. However, it needs a primer in order to secure adhesiveness. In addition, it has disadvantages such that it tends to generate cracks on coating films at the time of heat molding.
Japanese Patent Publication No. 2005-239832,A provides an ultraviolet-curing type antifogging composition using a particular hydrophilic monomer. However, since it is a mixture of organic solvents, there is a worry that the organic solvents are evaporated and released into atmosphere during the coating process. In addition, the term "antifogging properties" has two different meanings. One is a property wherein fog generated by contacting with vapor can disappear quickly (antifogging property-1). The other is a property wherein fog does not generate even if contacted with vapor for a long term (antifogging property-2). The ultraviolet-curing type antifogging composition provided in Japanese Patent Publication No. 2005-239832 can not satisfy the antifogging property-2, because the proportion of difunctional components are higher than monofunctional components among the hydrophilic acrylate components.
Japanese Patent Publication No. 2001-131445 provides a composition comprising a specific hydrophilic monomer, a nonionic surfactant having an HLB of 6-11 and an anionic surfactant as a nonsolvent-type antifogging coating film resin composition. However, since it is consisting of monomers having small number of functional groups, slipperiness of cured coating film is poor and the surface is easily scratched by wiping out.

### SUMMARY OF THE INVENTION

An object of the present invention is to provide an ultraviolet-curing type antifogging coating composition capable of providing a cured coating film excellent in antifogging properties, slipperiness and processability, and an antifogging polycarbonate resin product having a cured coating film obtained by curing said coating composition on its surface.

As a result of extensive studies, the inventors have found that a composition comprising a multifunctional acrylate oligomer and a hydrophilic acrylate monomer is excellent in antifogging properties, and have accomplished the present invention.

That is, the present invention provides an antifogging coating composition and a polycarbonate resin product as follows:
1) An ultraviolet-curing type antifogging coating composition which comprises
   (A) 100 parts by weight of a photo-polymerizable composition comprising the following components (a-1) to (a-4):
      (a-1) an ethoxylated bisphenol A di(meth)acrylate; 4-35 wt%
      (a-2) a polyfunctional acrylate oligomer having 2-15 functional groups; 3-45 wt%
      (a-3) a hydrophilic monofunctional acrylate; 20-60 wt% and more than the amount of said component (a-1)
      (a-4) a di(meth)acrylate other than said component (a-1) ; 10-40 wt%
      and
   (B) ; 1 to 10 parts by weight of a photo-polymerization initiator.
2) The ultraviolet-curing type antifogging coating composition according to claim 1, wherein said (a-1) ethoxylated bisphenol A di(meth)acrylate is a compound having a structure represented by the following formula (1): 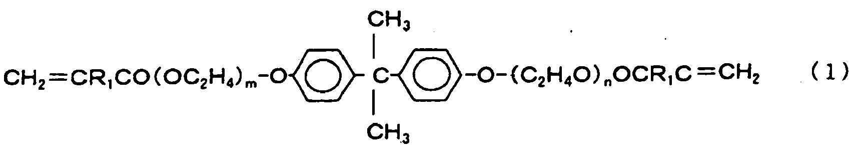 (R₁ represents a hydrogen atom or a methyl group. m and n represent an average addition molar number of ethyleneoxide. m+n is in the range of 10-35.)
3) The ultraviolet-curing type antifogging coating composition according to claim 1, wherein said (a-2) polyfunctional acrylate oligomer has the molecular weight of not less than 400.
4) The ultraviolet-curing type antifogging coating composition according to claim 1, wherein said (a-2) polyfunctional acrylate oligomer is a polyester (meth)acrylate oligomer or a urethane poly(meth)acrylate oligomer.
5) The ultraviolet-curing type antifogging coating composition according to claim 1, wherein said (a-3) hydrophilic monofunctional acrylate is a phenolic ethyleneoxide-modified (meth)acrylate.
6) The ultraviolet-curing type antifogging coating composition according to claim 1, wherein said (a-4) di(meth)acrylate is a mono-alkyleneglycol di(meth)acrylate having straight-chain or branched alkylene groups with the carbon number of 4 to 20, or a poly-alkyleneglycol di(meth)acrylate having straight-chain or branched alkylene groups with the carbon number of 2 to 4.
7) A polycarbonate resin product wherein a cured coating film obtained by curing said ultraviolet-curing type antifogging coating composition according to claims 1 to 6 is formed on its surface.

A transparent antifogging cured coating film excellent in antifogging properties, slipperiness and processability can be formed on the surface of a polycarbonate resin product by using the ultraviolet-curing type antifogging coating composition according to the present invention. Especially, the antifogging cured coating film formed by the antifogging coating composition of the present invention has remarkably high hydrophilicity over the prior art. Therefore, since moisture is adsorbed on the surface of the cured coating film to form a membrane quickly, the surface does not become foggy even if contacted with vapor.
Thus, the cured coating film formed by the antifogging coating composition of the present invention has not only the property wherein fog generated by contacting with vapor can disappear quickly (antifogging property-1) but also the property wherein fog does not generate even if contacted with vapor for a long term (antifogging property-2).

### DETAILED DESCRIPTION OF THE INVENTION

### 1. Antifogging Coating Composition:

The antifogging coating composition of the present invention comprises a photo-polymerizable composition (A) comprising the following components (a-1) to (a-4) and a photo-polymerization initiator (B).
(a-1) an ethoxylated bisphenol A di(meth)acrylate
(a-2) a polyfunctional acrylate oligomer having 2-15 functional groups;
(a-3) a hydrophilic monofunctional acrylate;
(a-4) a di(meth)acrylate other than said component (a-1);

### (1) Photo-polymerizable Composition (A):

### <Component (a-1)>

The component (a-1), an ethoxylated bisphenol A di(meth)acrylate, comprised in the photo-polymerizable composition is preferably a compound having a structure represented by the following formula (1). 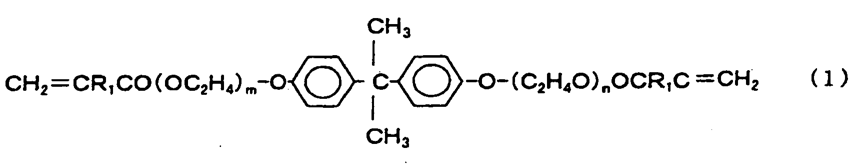 In the above formula (1), R₁ represents, each independently, a hydrogen atom or a methyl group. Preferably, R₁ is a methyl group.
m and n represent an average addition molar number (or addition molar ratio) of ethylene oxide (hereinafter, "EO"). m+n is in the range of 10-35, preferably 17-35.

When m+n is less than 10, hydrophilicity may become insufficient and sufficient antifogging properties may not be obtained. When m+n is more than 35, surface stickiness is remained on a cured coating film and the surface is easily scratched by wiping out.

The content of the ethoxylated bisphenol A di (meth) acrylate is 4 to 35 wt% (= % by weight), preferably 10 to 30 wt% based upon the total weight of the photo-polymerizable composition. When the content of the component (a-1) is less than 4 wt%, hydrophilicity is insufficient and satisfactory antifogging properties are not obtained. When the content of the component (a-1) is more than 35 wt%, stickiness is remained on the surface of a cured coating film and the surface is easily scratched by wiping out.

As the above-mentioned ethoxylated bisphenol A di (meth) acrylate, commercial products can be used. Examples of the commercial products include tradename;"BPE-20", manufactured by DAI-ICHI KOGYO SEIYAKU CO. , LTD. (EO addition molar ratio; 20 mole), tradename;"FA-321M", manufactured by Hitachi Chemical Co., Ltd. (EO addition molar ratio; 10 mole), tradename;"A-BPE-10", manufactured by Shin-nakamura Chemical Co., Ltd. (EO addition molar ratio; 10 mole), tradename;"A-BPE-20", manufactured by Shin-nakamura Chemical Co., Ltd. (EO addition molar ratio; 17 mole), and the like.

### <Component (a-2)>

The component (a-2) of the present invention is a polyfunctional acrylate oligomer having 2-15 functional groups, preferably 2-6 functional groups. The term "oligomer" here means a polymeric compound wherein the number of constitutional units is 2 or more, preferably 2 to 20. The molecular weight of the oligomer is preferably not less than 400, more preferably not less than 1200.

Examples of the component (a-2) include polyfunctional acrylate oligomers cited in the following (1) to (4):
(1) A polyfunctional polyol (meth)acrylate oligomer, which is an oligomer of polyacrylate or polymethacrylate obtained by reacting a polyvalent alcohol (polyol or polyhydroxy alcohol) with a compound selected from the group consisting of acrylic acid, methacrylic acid and the derivatives thereof.
(2) A polyfunctional polyester (meth)acrylate oligomer, which is an oligomer of polyacrylate or polymethacrylate of saturated or unsaturated polyester obtained by reacting a polyvalent alcohol (polyol or polyhydroxy alcohol), a polyvalent carboxylic acid (polybasic acid or polybasic carboxylic acid) or anhydride thereof and a compound selected from the group consisting of acrylic acid, methacrylic acid and the derivatives thereof.
(3) A polyfunctional urethane (meth)acrylate oligomer, which is an oligomer of urethane polyacrylate or urethane polymethacrylate obtained by reacting polyisocyanate with a compound having active hydrogen atoms and acryloyloxy or methacryloyloxy groups.
(4) A polyfunctional polyglycidylether (meth)acrylate oligomer, which is an oligomer obtained by reacting polyglycidylether with a compound selected from the group consisting of acrylic acid, methacrylic acid and the derivatives thereof.

Examples of polyvalent alcohols (polyols) used for producing the above-mentioned polyfunctional polyol (meth)acrylate oligomer (1) include divalent alcohols such as ethyleneglycol, diethyleneglycol, triethyleneglycol, tetraethyleneglycol, polyethyleneglycol having the number average molecular weight of 300-1000, propyleneglycol, dipropyleneglycol, 1,3-propanediol, 1,4-butanediol, 1, 5-pentanediol, 1, 6-hexanediol, neopentylglycol, 2-ethyl-1,3-hexanediol, 2,2'-thiodiethanol, and 1,4-cyclohexanedimethanol; trivalent alcohols such as trimethylolethane, trimethylolpropane, pentaglycerol, glycerol, 1,2,4-butanetriol, and 1,2,6-hexanetriol; tetravalent or higher multiple-valued alcohols such as pentaerythritol, diglycerol, and dipentaerythritol.

The polyfunctional polyester (meth)acrylate oligomer (2) can be obtained by reacting (meth)acrylic acid, a polybasic carboxylic acid or anhydride thereof and a polyol (polyhydroxy alcohol or polyvalent alcohol). More precisely, after producing a polyesterpolyol by dehydration condensation reaction of a dibasic carboxylic acid or anhydride with a polyol, the reaction product is reacted with acrylic acid or methacrylic acid to obtain a polyfunctional polyester (meth)acrylate oligomer (2).

A polyhydroxy compound, which is also referred to as "polyol", used for producing polyesterpolyol is preferably a compound having 3 or more of hydroxyl groups. The polyol used in the present invention is preferably a compound wherein the number of hydroxyl groups is 3 to 6, more preferably 3 to 4, and the number of carbon atoms is 2 to 36. Examples of these polyols include straight-chain or branched aliphatic polyols, alicyclic polyols, aromatic polyols, and polyetherpolyols.
Examples of aliphatic polyols include triols such as glycerin, trimethylolpropane, and trimethylolethane; tetraols such as pentaerythritol and di-trimethylolpropane; and hexaols such as dipentaerythritol.
The aliphatic polyols and alicyclic polyols can be reacted with various amounts of ethyleneoxide and/or propyleneoxide to obtain ethoxylated and/or propoxylated polyols. Examples of the ethoxylated and/or propoxylated polyols include ethoxylated trimethylolpropane, propoxylated trimethylolpropane, ethoxylated glycerin, propoxylated glycerin, ethoxylated pentaerythritol, and propoxylated pentaerythritol.
Examples of aromatic polyols include bisphenol A diacrylate.
Examples of polyetherpolyols used in the present invention include aromatic polyethers and aliphatic polyethers. The aliphatic groupsof polyetherpolyolscan bestraight-chain,branched or cyclic. Examples of the polyetherpolyols include tri-glycols such as triethyleneglycol, polyethyleneglycol, polypropyleneglycol, polybutyleneglycol; and complex polyethers such as poly(propylene-ethylene)glycol.
Examples of the dibasic acids or anhydride thereof include aliphatic dicarboxylic acids such as malonic acid, succinic acid, glutaricacid, adipic acid, and sebacic acid;-alicyclic dicarboxylic acids such as tetrahydrophthalic acid and 3,6-endomethylene tetrahydrophthalic acid; aromatic dicarboxylic acids such as phthalic acid, isophthalic acid and terephthalic acid; trimellitic acid; pyromellitic acid; thiodiglycolic acid; thiodivaleric acid; diglycolic acid; and unsaturated dicarboxylic acids such as maleic acid, fumaric acid and itaconic acid. These dicarboxylic acids can be used in the form of chloride, anhydride and ester thereof. Among them, anhydrides of the polycarboxylic acids are preferably used. The most preferable compound is anhydrides of alicyclic dicarboxylic acids such as tetrahydrophthalic acid anhydride.
The polyesterpolyol is a polyol having ester bonds. The polyesterpolyol can be obtained by reacting an excess amount of polyols with a dibasic acid or anhydride thereof to produce a compound of low molecular weight having 1 to 6 of ester bonds and reactive hydroxyl groups. The polyesterpolyol of the present invention can be synthesized by using at least one of the above-mentioned polyols which may be used each independently or in combination with each other.
The polyesterpolyol can also be used in the form of an ethoxylated and/or a propoxylated polyesterpolyol which is obtained by reacting with various amounts of ethyleneoxide and/or propyleneoxide.
The polyfunctional polyester (meth)acrylate oligomer (2) used in the present invention can be obtained by reacting a polyesterpolyol thus obtained with a compound selected from the group consisting of acrylic acid, methacrylic acid and the derivatives thereof. Among the group of compounds consisting of acrylic acid, methacrylic acid and the derivatives thereof, acrylic acid is preferable.

Polyols or polyhydroxy compounds used for producing the polyfunctional polyester (meth)acrylate oligomer (2) can be used each independently or in combination with other polyhydroxy compounds.
In addition, the compounds consisting of acrylic acid, methacrylic acid and the derivatives thereof can be used each independently or in combination with each other. When a mixture of hydroxyl compounds is used as polyol components, a mixed-ester product is obtained. When a mixture of acrylic acid and methacrylic acid is used as acrylic compounds, also a mixed-acrylate oligomer is obtained.

The most preferable polyester (meth)acrylate oligomer used in the present invention is an acrylate oligomer having 2 to 4 functional groups obtained by esterification reaction of tetrahydrophthalic acid anhydride, trimethylolpropane and acrylic acid according to the usual manner.

Examples of the polyfunctional urethane (meth)acrylate oligomers (3) include a urethanized reaction product obtained by reacting an (meth)acrylate monomer having at least one (meth)acryloyloxy group and a hydroxy group in a molecule with a polyisocyanate, and a urethanized reaction product obtained by reacting an (meth)acrylate monomer having at least one (meth)acryloyloxy group and a hydroxy group in a molecule with an isocyanate compound obtained by reacting polyols with a polyisocyanate.

Examples of polyisocyanates used for the urethanization reaction in the process of producing a polyfunctional urethane (meth)acrylate oligomer (3) include diisocyanates and triisocyanates such as hexamethylene diisocyanate, lysine diisocyanate, isophoronediisocyanate, dicyclohexylmethane diisocyanate, tolylenediisocyanate, xylylenediisocyanate; diisocyanates obtained by hydrogenating aromatic isocyanates such as hydrogenated tolylenediisocyanate and hydrogenated xylylenediisocyanate; triphenylmethane triisocyanate, and dimethylenetriphenyl triisocyanate. Examples of polyisocyanates also include a polyisocyanate obtained by cyanurating diisocyanates.
Examples of polyols used for producing isocyanate compounds in a process of producing a polyfunctional urethane (meth)acrylate oligomer include above-exemplified compounds as polyvalent alcohols used for producing the polyol(meth)acrylate oligomers (1).
Examples of isocyanate compounds obtained by reacting the polyols and polyisocyanates include trimethylolpropane tolylenediisocyanate.
The compound having active hydrogen atoms and acryloyloxy or methacryloyloxy groups used for producing the polyfunctional urethane (meth)acrylate oligomer is preferably a compound having hydroxy groups and acryloyloxy or methacryloyloxy groups. Examples of the compound having hydroxy groups and (meth)acryloyloxy groups include 2-hydroxyethylacrylate and 2-hydroxyethylmethacrylate.
Examples of the polyfunctional urethane (meth)acrylate oligomers (3) include a reaction product obtained by reacting trimethylolpropane tolylenediisocyanate or a polyisocyanate having isocyanurate groups with a compound having active hydrogen atoms and (meth)acryloyloxy groups.
More precisely, examples of the polyfunctional urethane (meth)acrylate oligomer (3) include tris(2-hydroxyethyl)isocyanurate triacrylate oligomer, tris(2-hydroxyethyl)isocyanurate trimethacrylate oligomer, tris(2-hydroxyethyl)isocyanurate diacrylate oligomer, and tris(2-hydroxyethyl)isocyanurate dimethacrylate oligomer; di(2-hydroxyethyl) mono (2-hydroxyheptane) isocyanurate triacrylate oligomer, di(2-hydroxyethyl) mono (2-hydroxyheptane) isocyanurate trimethacrylate oligomer, di(2-hydroxyethyl) mono (2-hydroxyheptane) diacrylate oligomer, di(2-hydroxyethyl) mono (2-hydroxyheptane) dimethacrylate oligomer; and a compound having a urethane chain and having (meth)acryloyloxy groups at both ends of the chain of urethane wherein the molecular weight is not less than 1200.
As the above-mentioned polyfunctional urethane (meth)acrylate oligomer, commercial products can be used. Examples of the commercial products include tradename;"UN-3320HC", manufactured by Negami Chemical Industrial Co., Ltd., and tradename; "U6HA" manufactured by Shin-nakamura Chemical Co., Ltd.

Examples of polyglycidylethers used for producing the above-mentioned polyfunctional polyglycidylether (meth)acrylate oligomer (4) include ethyleneglycol diglycidylether, polypropyleneglycol diglycidylether, tripropyleneglycol diglycidylether, 1,6-hexanediol diglycidylether and bisphenol A diglycidylether.

The content of the component (a-2) polyfunctional acrylate oligomer having 2-15 functional groups is 3 to 45 wt%, preferably 3 to 10 wt% based upon the total weight of the photo-polymerizable composition. When the content of the component (a-2) is less than 3 wt%, sufficient hardness of the cured coating film can not be obtained. When the content of the component (a-2) is more than 45 wt%, though fulfilled in terms of hardness, satisfactory antifogging properties can not be obtained.

### <Component (a-3)>

Examples of the (a-3) hydrophilic monofunctional acrylates include acrylates modified by ethyleneoxide (EO) and the like. More precisely, the examples include phenolic EO-modified acrylates wherein phenols and acrylic acid are bonded through ethyleneoxide units such as phenol EO-modified acrylate (phenoxy polyethyleneglycol acrylate), para-cumylphenol EO-modified acrylate (para-cumylphenoxy polyethyleneglycol acrylate), and nonylphenol EO-modified acrylate (nonylphenoxy polyethyleneglycol acrylate); alkoxy polyethyleneglycol acrylates such as methoxy polyethyleneglycol acrylate, and octoxy polyethyleneglycol acrylate.

The average addition molar number of ethyleneoxide in the hydrophilic monofunctional acrylate (a-3) is preferably 9 to 23. When the average addition molar number of ethyleneoxide is less than 9, sufficient antifogging properties may not be obtained. When more than 2-3, stickiness may remain on the surface of cured coating films.

Addition of a monofunctional acrylate monomer having a cyclic ether structure is also effective.

As the above-mentioned hydrophilic monofunctional acrylates, commercial products can be used. Examples of the commercial products include tradename; "ARONIX M-113", manufactured by Toagosei Co., Ltd., and tradename; "NP-10EA" manufactured by KYOEISHA CHEMICAL Co., Ltd., but not particularly limited to them.

Examples of the monofunctional acrylate monomer having a cyclic ether structure include acryloyl morpholine, manufactured by KOHJIN Co., Ltd.

The content of (a-3) hydrophilic monofunctional acrylate is 20 to 65 wt%, preferably 45 to 65 wt% based upon the total weight of the photo-polymerizable composition. When the content of the component (a-3) is less than 20 wt%, satisfactory antifogging properties can be not obtained. When the content of the component (a-3) is more than 65 wt%, though antifogging properties are sufficient, hardness is not satisfactory.
In addition, it is necessary to adjust the content of the component (a-3) within the range of more than that of the component (a-1). When the content of (a-3) is not more than that of the component (a-1), durability of antifogging properties can not be obtained.

### <Component (a-4)>

The component (a-4) is not particular limited as long as it is selected from di(meth)acrylate compounds other than the component (a-4). Examples of the component (a-4) include the following compounds:
(i) mono-alkyleneglycoldi(meth)acrylateshavingstraight-chain or branched alkylene groups with the carbon number of 4 to 20, preferably 4 to 10, such as 1,4-butanediol di(meth)acrylate, 1,3-butyleneglycol di(meth)acrylate, 1,6-hexanediol di(meth)acrylate, neopentylglycol di(meth)acrylate, and 1,9-nonanediol di(meth)acrylate,
(ii) poly-alkyleneglycol di(meth)acrylates having straight-chain or branched alkylene groups with the carbon number of 2 to 4, such as dialkyleneglycol di(meth)acrylates such as diethyleneglycol di(meth)acrylate and dipropyleneglycol di(meth)acrylate; trialkyleneglycol di(meth)acrylates such as tripropyleneglycol di (meth) acrylate; tetraalkyleneglycol di(meth)acrylates such as tetraethyleneglycol di(meth)acrylate; and polyethyleneglycol di (meth) acrylate,
(iii) diglycidylether di (meth) acrylates such as bisphenol A diglycidylether di(meth)acrylate, and
(iv) other di(meth)acrylates such as hydroxypivalic acid neopentylglycol diacrylate and dicyclopentanyl di(meth)acrylate, but not particularly limited to them

Among the above di(meth)acrylates, a mono-alkyleneglycol di (meth) acrylate having straight-chain or branched alkylene groups with the carbon number of 4 to 20, or a poly-alkyleneglycol di (meth) acrylate having straight-chain or branched alkylene groups with the carbon number of 2 to 4 are preferable.

The content of (a-4) di (meth) acrylate is 10 to 40 wt%, preferably 10 to 30 wt% based upon the total weight of the photo-polymerizable composition. When the content of the component (a-4) is less than 10 wt%, adhesiveness between the cured coating film and a polycarbonate resin is not sufficient. When the content of the component (a-4) is more than 40 wt%, hardness and antifogging properties are insufficient.

### (a) Photo-polymerization initiator (B):

As the photo-polymerization initiator (B) to be used in the present invention, conventionally known photo-polymerization initiators can be used. Examples of the photo-polymerization initiators (B) include benzoin, benzophenone, benzoin ethylether, benzoin isopropylether, 2,2-dimethoxy-2-phenylacetophenone, 1-hydroxy-cyclohexylphenylketone,
2-hydroxy-2-methyl-1-phenylpropane-1-one,
2,4,6-trimethylbenzoyl-diphenylphosphineoxide,
azobis-isobutyronitrile and benzoylperoxide, but not particularly limited to them.

The content of the photo-polymerization initiator (B) is 1 to 10 parts by weight, more particularly 2 to 5 parts by weight based upon 100 parts by weight of the photo-polymerizable composition (A) . When the content of the photo-polymerization initiator (B) is less than 1 part by weight, difficulty in curability may occur. When the content of the photo-polymerization initiator (B) is more than 10 parts by weight, coloration of cured coating films may become highly visible.

### (3) Other Components:

In the ultraviolet-curing type antifogging coating composition of the present invention, known additives can be added properly depending on its intended use. Examples of such additives include surfactants, surface adjusters such as silicones and acryl polymers, commonly used diluents, and ultraviolet absorbent.

### 2. Polycarbonate resin product:

The polycarbonate resin product of the present invention is characterized in that a cured coating film of the above-mentioned antifogging coating composition of the present invention is formed on a surface of a polycarbonate resin-molded article.
The polycarbonate resin-molded articles are not limited as long as it is molded of conventionally known polycarbonate resin molding materials. The polycarbonate resin is a carbon acid ester polymer of a polyhydroxy compound. Examples of the polycarbonate resins include a thermoplastic polycarbonate resin obtained by an interfacial polycondensation of phosgene and an aromatic dihydroxy compound independently or in combination with a small amount of other polyhydroxy compounds, and a thermoplastic polycarbonate resin which may have branches obtained by an ester exchange reaction of carbonic acid diester and an aromatic dihydroxy compound independently or in combination with a small amount of other polyhydroxy compounds. Generally, a carbonic acid ester polymer obtained by using bisphenol A as a main raw material of a polyhydroxy compound is preferable.
The molecular weight of the polycarbonate resin is preferably selected within the range wherein a sheet can be formed by common extrusionmolding. Moreprecisely, theviscosity-averagemolecular weight of the polycarbonate resin is preferably 15, 000-40, 000, more preferably 20,000-35,000, most preferably 22,000-30,000. Especially for the use wherein impact strength is required, the viscosity-average molecular weight of 27,000-30,000 is more preferable.
In addition, various conventionally known additives can be blended with the polycarbonate resin. Examples of the additives include an antioxidant, a color protecting agent, an ultraviolet absorber, a light-diffusing agent, a flame retardant, a mold-releasing agent, a lubricant, an antistatic agent, a dye and a pigment.
Although examples of the molded articles of the polycarbonate resin include molded articles of any shapes, an article in a form of sheet is preferable. Though the thickness of the sheet is not particularly limited, the preferable thickness of the sheet is 0.5 to 4.0 mm, more preferable 1.0 to 3.0 mm. The sheet article can be formed to various intended shapes by heat molding or the like.
In the present invention, a cured coating film (an antifogging coating layer) is formed on the polycarbonate resin article by coating the ultraviolet-curing type antifogging coating composition of the present invention to produce a polycarbonate rein product. The coating process to form a cured coating film can be conducted by methods such as a roll coat method, spin coat method and a method proposed in JP 2004-130540,A. In the curing process by ultraviolet irradiation, there is a case that inhibition of curing occurs under existence of oxygen. Therefore, it is preferable to conduct the curing process under the nitrogen atmosphere, to conduct curing after laying cover films such as PET films over the article, or to conduct curing after inserting a coating composition between a glass plate and a polycarbonate resin article.

In order to accommodate various methods of coating, an organic solvent can be blended to the ultraviolet-curing type antifogging coating composition to adjust a viscosity.

The thickness of the antifogging coating film layer obtained by ultraviolet curing is 3 to 30µm, preferably 4 to 20µm, more preferably 5 to 12µm. When the thickness of the antifogging coating film is less than 3µm, the improvement of surface hardness is insufficient. When the thickness is more than 30 µm, heatmoldability is deteriorated and there is a disadvantage in terms of cost.

When applying the polycarbonate resin product of the invention to a goggle, a helmet shield, a water goggle, sunglasses and the like, it is preferable to conduct a hard coat treatment on the opposite side against the antifogging-treated surface. More preferably, the hard coat treatment is conducted using a heat-moldable hard coat agent.

Examples of the heat-moldable hard coat agents include an ultraviolet-curing type agent containing a polyfunctional urethane acrylate oligomer, a difunctional acrylate, an organic solvent and a photo-polymerization initiator; and a heat-curing type urethane-melamine-alkyd resin containing a melamine resin. Examples of ultraviolet-curing type hard coat agents include tradename; "UT-001", manufactured by Nippon Bee Chemical Co., Ltd. Examples of heat-curing type hard coat agents include tradename; "U-PiCA coat ES-7614", manufactured by Japan U-PiCA Company, Ltd.

### PREFERRED EMBODIMENT OF THE INVENTION

The present invention will be described in more detail below, referring to Examples which are not intended to limit the scope of the present invention.

The polycarbonate resin molding article used in the following Examples and Comparative Examples is a sheet-type molded article with the thickness of 1.5mm, made of a polycarbonate resin, tradename; "Iupilon NF-2000U", manufactured by Mitsubishi Engineering-Plastics Corporation.

The components consisting of the ultraviolet-curing type antifogging coating composition are as follows, and the compounding ratio thereof is shown in Table 1:
#230: 1,6-hexanediol diacrylate, manufactured by OSAKA ORGANIC CHEMICAL INDUSTRY LTD.
#260:1,9-nonanediol diacrylate, manufactured by OSAKA ORGANIC CHEMICAL INDUSTRY LTD.
U6HA: urethane acrylate oligomer having 6 functional groups, manufactured by Shin-nakamura Chemical Co., Ltd.
Eb-220: urethane acrylate oligomer having 6 functional groups, manufactured by DAICEL-CYTEC COMPANY LTD.
R-2402: polyester acrylate oligomer having 4 functional groups, manufactured by DAI-ICHI KOGYO SEIYAKU CO., LTD.
NK ESTER BPE 1300N: Ethoxylated bisphenol A dimethacrylate (EP addition molar ratio; 30 mole), manufactured by Shin-nakamura Chemical Co., Ltd.
BPE-20: Ethoxylated bisphenol A diacrylate (EP addition molar ratio; 20 mole), manufactured by DAI-ICHI KOGYO SEIYAKU CO., LTD.
FA-321M: Ethoxylated bisphenol A dimethacrylate (EP addition molar ratio; 10 mole), manufactured by Hitachi Chemical Co., Ltd.
NP-10EA: nonylphenoxy polyethylene glycol acrylate (EP addition molar ratio; 10 mole), manufactured by KYOEISHA CHEMICAL Co., Ltd.
AM-130G: methoxy polyethyleneglycol #550 acrylate (EP addition molar ratio; 13 mole), manufactured by Shin-nakamura Chemical Co., Ltd.
Irgacure-184; 1-hydroxy-cyclohexylphenylketone, manufactured by Ciba Specialty Chemicals K.K.

Evaluation of physical properties in the following Examples and Comparative Examples are conducted in accordance with the methods as follows:

### 1) Evaluation of Antifogging property-1:

A breath is blown on a cured coating film of a sample sheet for 5 seconds to generate fog on the surface. The one wherein the fog disappears within 2 seconds is determined to be acceptable.

### 2) Evaluation of Antifogging property-2:

In accordance with ECE-R25, the cured coating film of the sample sheet is contacted with steam generated from a water bath of 50 °C. The one wherein the surface does not become foggy for 20 seconds is determined to be acceptable (○).

### 3) Evaluation of Slipperiness

The surface of the cured coating film of the sample sheet is wiped with absorbent cotton by shuttling 15 times under 1 kg/10 cm² of load. Then, cotton waste adhered to the surface of the cured coating film is blown off by using an air gun. The one wherein cotton waste does not remain after blowing off is determined to be acceptable(○).

### 4) Evaluation of Boiling Properties:

In accordance with JIS-K5400, a sample sheet is immersed in boiling water for 30 minutes. Then, the sample sheet is taken out from the bath to cool down to the room temperature.

Cutting of 11 lines each vertically and horizontally is performed with 1 mm spacing on the cured coating film of the sample sheet by a razor blade to make 100 grids. An adhesive tape, manufactured by Nichiban Co, Ltd., is adhered firmly on the grids and then the tape is peeled off quickly to the front direction at the angle of 90° (degree). The above-mentioned evaluation of antifogging property-1 is also conducted at the same time. The one wherein the result of evaluation of antifogging property-1 is favorable and no grids is peeled off after peeling the adhesive tape is determined to be acceptable (○). The one wherein at least one grid is peeled off is determined to be unacceptable (×).

### 5) Evaluation of Heat Moldability

A sheet of polycarbonate resin cut in size of 140 mm long × 400 mm wide for molding of a helmet shield is heated in a hot-air circulating drier at 170 °C for 3 minutes. Immediately after taking out of the drier, the sheet is molded by press molding using a wooden male/female helmet shield mold which has a three-dimensional shape with the radius of curvature in the long-side direction being 125 mm and with the radius of curvature in the short-side direction being 500 mm, wherein a flannel cloth of long fibers which hardly making dust is adhered on the surface thereof. Molding process is conducted so that the surface of the antifogging cured coating film is contacted to the convex mold. Pressurization is continued for 2 minutes. Then, the mold is released to take the molded article out. The molded article thus obtained is evaluated and the one having no crack and exhibiting favorable antifogging property-1 is determined to be acceptable (○).

### <EXAMPLES 1 TO 6 and COMPARATIVE EXAMPLES 1 TO 4>

Using a coating composition prepared in accordance with a mixing proportion shown in Table 1, a cured coating film was formed on a polycarbonate resin molded article to obtain a sample sheet of the polycarbonate resin product by a method shown as follows:
A sheet of a polycarbonate resin ("Iupilon NF-2000U") with a thickness of 15 mm was heated in a hot-air circulating drier kept at 80 °C. Then, the prepared coating composition was put thereon and was extended using a bar coater to form a film so that the thickness thereof after curing becomes 5 to 10 µm. A PET film with a thickness of 100 µm was put on the coating film and was leveled with a hand roller. Then, using a high-pressure mercury vapor lamp with the power density of 80 W/cm, an ultraviolet irradiation was conducted under the condition of 1.5m/min of conveyor speed at the position of 12 cm from the light source to prepare a cured coating film. After curing, the PET film was peeled off to obtain a polycarbonate resin product having a cured coating film of an ultraviolet-curing type antifogging coating composition thereon.

The above-mentioned evaluations 1) to 5) were conducted with the polycarbonate resin products thus obtained.

The results of each evaluation were shown in Table 2. The compositions of Examples were acceptable in all properties. On the other hand, the compositions of Comparative Examples could not satisfy all the properties and the total evaluations were "unacceptable".

**Table 1: Compounding Ratio**

| | Example | | | | | | Comparative Example | | | |
|---|---|---|---|---|---|---|---|---|---|---|
| | 1 | 2 | 3 | 4 | 5 | 6 | 1 | 2 | 3 | 4 |
| #230 | 25 | 25 | | | | | 25 | 25 | 5 | |
| #260 | | | 25 | 25 | 25 | 25 | | | | 25 |
| U6HA | | 15 | | | | | 15 | 15 | 25 | |
| Eb-220 | | | 15 | | 15 | 15 | | | | 15 |
| R-2402 | 15 | | | 15 | | | | | | |
| BPE-1300N | 20 | 20 | 20 | 20 | | | | 60 | 30 | 40 |
| BPE-20 | | | | | 20 | | | | | |
| FA-321M | | | | | | 20 | | | | |
| NP-10EA | 40 | 40 | 40 | | 40 | 40 | 60 | | 40 | 20 |
| AM-130G | | | | 40 | | | | | | |
| Irgacure-184 | 3 | 3 | 3 | 3 | 3 | 3 | 3 | 3 | 3 | 3 |

**Table 2: Results of Evaluations**

| | Example | | | | | | Comparative Example | | | |
|---|---|---|---|---|---|---|---|---|---|---|
| | 1 | 2 | 3 | 4 | 5 | 6 | 1 | 2 | 3 | 4 |
| Antifogging Poperty-1 | ○ | ○ | ○ | ○ | ○ | ○ | ○ | ○ | ○ | ○ |
| Antifogging Poperty-2 | ○ | ○ | ○ | ○ | ○ | ○ | ○ | × | ○ | × |
| Slipperiness | ○ | ○ | ○ | ○ | ○ | ○ | × | ○ | ○ | ○ |
| Boiling Properties | ○ | ○ | ○ | ○ | ○ | ○ | ○ | ○ | × | ○ |
| Heat Moldability | ○ | ○ | ○ | ○ | ○ | ○ | ○ | ○ | ○ | ○ |
| Total Evaluation | ○ | ○ | ○ | ○ | ○ | ○ | × | × | × | × |

## Claims

1. An ultraviolet-curing type antifogging coating composition which comprises
(A) 100 parts by weight of a photo-polymerizable composition comprising the following components (a-1) to (a-4):
(a-1) an ethoxylated bisphenol A di (meth) acrylate; 4-35 wt%
(a-2) a polyfunctional acrylate oligomer having 2-15 functional groups; 3-45 wt%
(a-3) a hydrophilic monofunctional acrylate; 20-60 wt% and more than the amount of said component (a-1)
(a-4) a di (meth) acrylate other than said component (a-1); 10-40 wt%
and (B) ; 1 to 10 parts by weight of a photo-polymerization initiator.

2. The ultraviolet-curing type antifogging coating composition according to claim 1, wherein said (a-1) ethoxylated bisphenol A di(meth)acrylate is a compound having a structure represented by the following formula (1): 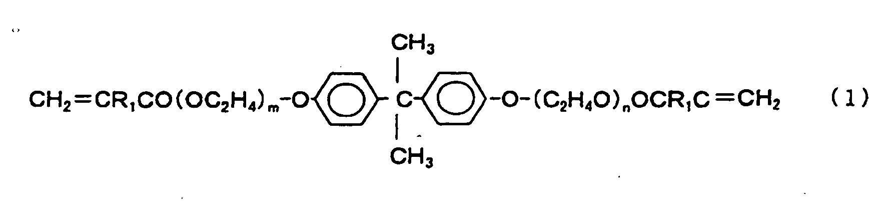 (R₁ represents a hydrogen atom or a methyl group. m and n represent an average addition molar number of ethyleneoxide. m+n is in the range of 10-35.)

3. The ultraviolet-curing type antifogging coating composition according to claim 1, wherein said (a-2) polyfunctional acrylate oligomer has the molecular weight of not less than 400.

4. The ultraviolet-curing type antifogging coating composition according to claim 1, wherein said (a-2) polyfunctional acrylate oligomer is a polyester (meth)acrylate oligomer or a urethane poly(meth)acrylate oligomer.

5. The ultraviolet-curing type antifogging coating composition according to claim 1, wherein said (a-3) hydrophilic monofunctional acrylate is a phenolic ethyleneoxide-modified (meth)acrylate.

6. The ultraviolet-curing type antifogging coating composition according to claim 1, wherein said (a-4) di(meth)acrylate is a mono-alkyleneglycol di(meth)acrylate having straight-chain or branched alkylene groups with the carbon number of 4 to 20, or a poly-alkyleneglycol di(meth)acrylate having straight-chain or branched alkylene groups with the carbon number of 2 to 4.

7. A polycarbonate resin product wherein a cured coating film obtained by curing said ultraviolet-curing type antifogging coating composition according to claims 1 to 6 is formed on its surface.

## Patentansprüche

1. Schleierschutzbeschichtungszusammensetzung vom Ultraviolett-härtenden Typ, die
(A) 100 Gew.-Teile einer fotopolymerisierbaren Zusammensetzung, umfassend die folgenden Komponenten (a-1) bis (a-4):
(a-1) ein ethoxyliertes Bisphenol-A-di(meth)acrylat; 4 bis 35 Gew.%;
(a-2) ein polyfunktionelles Acrylatoligomer mit 2 bis 15 funktionellen Gruppen; 3 bis 45 Gew.%;
(a-3) ein hydrophiles monofunktionelles Acrylat; 20 bis 60 Gew.% und mehr als die Menge der Komponente (a-1);
(a-4) ein Di(meth)acrylat, das von der Komponente (a-1) verschieden ist; 10 bis 40 Gew.%;
und
(B) 1 bis 10 Gew.-Teile eines Fotopolymerisationsstarters umfasst.

2. Schleierschutzbeschichtungszusammensetzung vom Ultraviolett-härtende Typ gemäß Anspruch 1, wobei das ethoxylierte Bisphenol-A-di(meth)acrylat (a-1) eine Verbindung mit einer durch die folgende Formel (1) dargestellten Struktur ist: 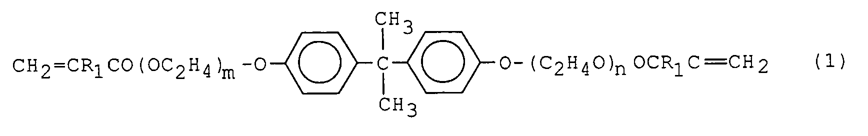 (R₁ stellt ein Wasserstoffatom oder eine Methylgruppe dar, m und n stellen mittlere molare Additionszahlen von Ethylenoxid dar, m+n liegt im Bereich von 10 bis 35).

3. Schleierschutzbeschichtungszusammensetzung vom Ultraviolett-härtenden Typ gemäß Anspruch 1, wobei das polyfunktionelle Acrylatoligomer (a-2) ein Molekulargewicht von nicht weniger als 400 aufweist.

4. Schleierschutzbeschichtungszusammensetzung vom Ultraviolett-härtenden Typ gemäß Anspruch 1, wobei das polyfunktionelle Acrylatoligomer (a-2) ein Polyester(meth)acrylatoligomer oder ein Urethanpoly(meth)acrylatoligomer ist.

5. Schleierschutzbeschichtungszusammensetzung vom Ultraviolett-härtenden Typ gemäß Anspruch 1, wobei das hydrophile monofunktionelle Acrylat (a-3) ein phenolisches Ethylenoxid-modifiziertes (Meth)acrylat ist.

6. Schleierschutzbeschichtungszusammensetzung vom Ultraviolett-härtenden Typ gemäß Anspruch 1, wobei das Di(meth)acrylat (a-4) ein Monoalkylenglycoldi(meth)acrylat mit geradkettigen oder verzweigten Alkylengruppen mit einer Kohlenstoffatomzahl von 4 bis 20 oder ein Polyalkylenglycoldi(meth)acrylat mit geradkettigen oder verzweigtkettigen Alkylengruppen mit einer Kohlenstoffatomanzahl von 2 bis 4 ist.

7. Polycarbonatharzprodukt, wobei ein gehärteter Beschichtungsfilm, der durch Härten der Schleierschutzbeschichtungszusammensetzung vom Ultraviolett-härtenden Typ gemäß den Ansprüchen 1 bis 6 erhalten wird, auf der Oberfläche gebildet ist.

## Revendications

1. Composition de revêtement anticondensation du type durcissant aux ultraviolets qui comprend
(A) 100 parties en poids d'une composition photopolymérisable comprenant les composants (a-1) à (a-4) suivantes :
(a-1) un di(méth)acrylate de bisphénol A éthoxylé ; 4 à 35% en poids
(a-2) un oligomère d'acrylate polyfonctionnel ayant 2 à 15 groupes fonctionnels ; 3 à 45% en poids
(a-3) un acrylate monofonctionnel hydrophile ; 20 à 60% en poids et plus que la quantité dudit composant (a-1)
(a-4) un di(méth)acrylate autre que ledit composant (a-1) ; 10 à 40% en poids
et (B) 1 à 10 parties en poids d'un initiateur de photopolymérisation.

2. Composition de revêtement anticondensation du type durcissant aux ultraviolets selon la revendication 1, dans laquelle ledit di(méth)acrylate de bisphénol A éthoxylé (a-1) est un composé ayant une structure représentée par la formule (1) suivante : 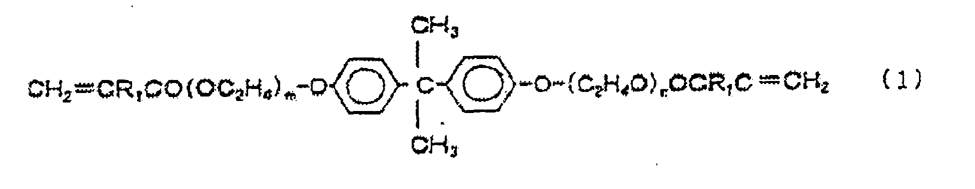 (R₁ représente un atome d'hydrogène ou un groupe méthyle, m et n représentent un nombre molaire moyen par addition d'oxyde d'éthylène. m + n est dans la plage de 10 à 35.)

3. Composition de revêtement anticondensation du type durcissant aux ultraviolets selon la revendication 1, dans laquelle ledit oligomère d'acrylate polyfonctionnel (a-2) a le poids moléculaire de pas moins de 400.

4. Composition de revêtement anticondensation du type durcissant aux ultraviolets selon la revendication 1, dans laquelle ledit oligomère d'acrylate polyfonctionnel (a-2) est un oligomère de (méth)acrylate de polyester ou un oligomère de poly(méth)acrylate d'uréthane.

5. Composition de revêtement anticondensation du type durcissant aux ultraviolets selon la revendication 1, dans laquelle ledit acrylate monofonctionnel hydrophile (a-3) est un (méth)acrylate modifié à l'oxyde d'éthylène phénolique.

6. Composition de revêtement anticondensation du type durcissant aux ultraviolets selon la revendication 1, dans laquelle ledit di(méth)acrylate (a-4) est un di(méth)acrylate de mono-alkylèneglycol ayant des groupes alkylène à chaîne droite ou ramifiés avec le nombre de carbone de 4 à 20, ou un di(méth)acrylate de polyalkylèneglycol ayant des groupes alkylène à chaîne droite ou ramifiés avec le nombre de carbone de 2 à 4.

7. Produit de résine de polycarbonate dans lequel un film de revêtement durci obtenu par durcissement de ladite composition de revêtement anticondensation du type durcissant aux ultraviolets selon les revendications 1 à 6 est formé sur sa surface.
